# FASCICULE DE BREVET EUROPEEN

(11) **EP 1 362 078 B1**
(45) Date de publication et mention de la délivrance du brevet: **23.05.2018**
(21) Numéro de dépôt: 02705021.0
(22) Date de dépôt: 10.01.2002
(51) Int. Cl.: C08K 9/04, C08K 9/06, C09C 3/08, C09C 3/12

(54) **PROCEDE DE TRAITEMENT D'UNE CHARGE MINERALE PAR UN POLYDIALKYLSILOXANE ET UN ACIDE GRAS, CHARGES HYDROPHOBES AINSI OBTENUES, ET LEURS APPLICAITONS DANS DES POLYMERES POUR FILMS "RESPIRABLES"**
VERFAHREN ZUR BEHANDLUNG EINES MINERALFÜLLSTOFFES MIT EINEM POLYDIALKYSILOXAN UND EINER FETTSÄURE, SO ERHALTENE MODIFIZIERTE FÜLLSTOFFE UND DEREN ANWENDUNGEN IN POLYMEREN FÜR ATMUNGSFÄHIGE FILME
METHOD FOR TREATING A MINERAL FILLER WITH A POLYDIALKYLSILOXANE AND A FATTY ACID, RESULTING HYDROPHOBIC FILLERS AND USES THEREOF IN POLYMERS FOR BREATHABLE FILMS

(30) Priorité: 12.01.2001 FR 0100365
(43) Date de publication de la demande: 19.11.2003
(73) Titulaire: Omya International AG, 4665 Oftringen (CH)
(72) Inventeur: HOPPLER, Hans, Ulrich, CH-4852 Rothrist (CH); OCHSNER, Edwin, CH-4803 Vordemwald (CH); FREY, Daniel, CH-5745 Safenwil (CH)
(74) Mandataire: Plougmann Vingtoft a/s
(86) Numéro de dépôt international: PCT/IB2002/000900
(87) Numéro de publication internationale: WO 2002/055596

(56) Documents cités:
- WO-A-96/26240
- WO-A-98/46673
- DATABASE WPI Section Ch, Week 199533 Derwent Publications Ltd., London, GB; Class A25, AN 1995-252412 XP002201222 & JP 07 157654 A (YOKOHAMA RUBBER CO LTD), 20 juin 1995 (1995-06-20)

## Description

La présente invention concerne le secteur technique des charges minérales traitées, notamment des carbonates traités, notamment des carbonates de calcium, et leurs applications dans l'industrie.

Plus particulièrement, l'invention concerne le traitement de telles charges en vue de les rendre hydrophobes et de les incorporer dans des polymères, par exemple pour la fabrication de films, notamment de films « respirables », eux mêmes incorporés par exemple dans des articles tels que des couches-culottes et produits analogues.

Pour réaliser des applications industrielles dans les domaines ci-dessus, il est nécessaire de produire des charges minérales, notamment des carbonates de calcium, présentant une excellente hydrophobicité et une excellente répulsion de l'eau et des fluides aqueux, et que l'on puisse mélanger ou « compounder » dans des polymères appropriés, généralement des polyoléfines ou des mélanges ou combinaisons de polyoléfines.

Les films dits « respirables » sont bien connus de l'homme du métier dans les applications précitées, ainsi que les propriétés que l'on exige d'eux.

On sait notamment qu'ils doivent encore présenter une très bonne caractéristique de transmission de la vapeur d'eau (ce qui correspond à leur caractéristique dite de film « respirable »). On pense que la charge incorporée contribue, lors d'un étirage notamment uni- ou biaxial, à la création de micropores qui augmente cette caractéristique de « respirabilité ». La charge revêt donc une importance primordiale dans le produit final obtenu, et ses propriétés.

Dans cette optique, le rapport d'aspect (« aspect ratio ») de la particule de charge doit être proche de 1 (rapport longueur / diamètre moyen). La charge ne doit pas contenir de particules grossières, notamment de dimension supérieure à 10 micromètres environ, avec une « coupe supérieure » (« top cut ») en granulométrie inférieure à 10 micromètres, et la charge ne doit contenir qu'une faible proportion de particules de diamètre équivalent sphérique inférieur à 0,5 micromètre, c'est-à-dire que la surface spécifique BET de la charge doit être inférieure à 6 m²/g.

Naturellement, les traitements envisagés doivent être compatibles avec les réglementations en vigueur.

Il faut encore, dans la quasi-totalité des applications visées par ce genre de produits, que la charge incorporée ne nuise pas à l'aptitude du film plastique à être étiré ou orienté uni - ou bi - axialement. Il faut également, pour ne pas créer de problèmes prévisibles de dosage lors de l'incorporation au polymère, que les propriétés d'écoulement de la charge soient bonnes. Il faut encore naturellement que la charge puisse se mélanger facilement avec le polymère, et se disperse uniformément dans la matrice polymère, faute de quoi le film final serait non homogène. Durant l'incorporation au polymère, la charge traitée ne doit pas dégager de substances gazeuses, qui se traduiraient dans le film par des zones troubles et mécaniquement non homogènes.

Il faut encore que le traitement n'affecte pas l'uniformité de la couleur du film obtenu c'est-à-dire permette d'obtenir un film sans moucheture.

On voit que les problèmes et exigences liées au traitement de telles charges sont nombreux et complexes, et quelquefois contradictoires.

On connaît, dans le domaine considéré, des carbonates de calcium traités par l'acide stéarique. On citera par exemple R. Rothon, « Particulate-Filled Polymer Composites », Longman, Harlow, 1995, ch. 4.

On connaît également des charges traitées par des silanes (E.P. Plueddemann, Silane coupling agents, Plenum Press, New York, 1982).

On connaît aussi des charges traitées par des organopolysiloxanes avec des liaisons H-SiO- (brevet EP 0 257 423) mais qui ne permettent pas d'obtenir des charges utilisables dans le domaine des films dits respirables.

On connaît encore des charges traitées par l'acide stéarique puis un siloxane, mais dans des applications totalement différentes.

Cependant, les traitement actuels au silane donnent lieu à des dégagements de méthanol.

Ainsi, l'article « NMR Spectroscopic Investigations on the hydrolysis of functional trialcoxysilanes » publié dans Zeitung für Naturforschung, 54b, 155 - 164 (1999) décrit un dégagement de méthanol.

Le brevet WO 99/61521 décrit un carbonate traité en surface pour obtenir une meilleure hydrophobicité. Le traitement emploie l'acide stéarique, comme dans le brevet WO 99/28050.

Le brevet WO 96/26240 décrit des charges ignifugées suite à un traitement par un acide gras seul ou par un acide gras et par un dérivé de siloxane. L'application visée se trouve dans le domaine où les polymères doivent avoir la propriété d'ininflammabilité.

Le brevet JP 57 182 364 décrit des charges utilisées comme revêtements de façade pour matériaux de construction, ledit revêtement étant étanche à l'eau, et comportant à la fois une résine synthétique et une charge traitée par un agent hydrofuge. Les résines sont des dérivés d'acétate de vinyle ou des copolymères acrylates - acétate de vinyle, qui ne sont pas aptes à être orientés uni - axialement ou biaxialement, et qui ne sont pas destinés à des films respirables. La charge peut présenter une granulométrie très importante, jusqu'à 100 micromètres. Le traitement exemplifié est donné pour l'acide stéarique et de la méthylcellulose, sur une résine acrylique.

On connaît encore le brevet WO 98/29481 qui décrit des films respirables (« breathable films ») et qui incorpore comme charge un carbonate de calcium. On pourra se référer à ce document en ce qui concerne les généralités relatives aux caractéristiques des films dits respirables. En ce qui concerne la charge, le brevet indique seulement qu'elle peut être traitée par un acide gras, comme l'acide stéarique ou béhenique, « afin de faciliter l'écoulement en vrac et la dispersion dans la matrice de polymère ».

Le brevet JP 52 39377 décrit l'emploi de stéarine pour préparer des charges, mais afin d'obtenir de meilleurs propriétés physiques de la matrice de résine.

Le brevet WO 00/12434 décrit l'utilisation d'un dessicant, notamment de CaO, pour préparer des charges permettant d'obtenir des films respirables convenables pour l'utilisateur.

L'art antérieur consacré aux films respirables a donc employé un traitement par l'acide stéarique ou par des produits dessicants du type CaO. L'acide stéarique a aussi été employé pour traiter des charges, mais dans des applications totalement différentes. On a aussi employé une association d'acide gras et de silane.

Aucune tendance ne se dégage donc de l'art antérieur, sauf le traitement d'une charge par le seul acide gras ou par l'association d'acide gras et de silane pour former un « revêtement ».

Il existe donc une recherche constante, et donc un besoin important et reconnu, pour l'amélioration des films respirables, et notamment l'obtention de films sans moucheture et sans espaces vides ainsi que pour l'amélioration de la charge traitée que ces films contiennent.

L'invention concerne un procédé pour traiter les charges minérales afin de leur conférer un caractère hydrophobe les rendant aptes à être incorporées dans des polymères au moyen desquels on produit les films dits « respirables », notamment des films de polyoléfine(s), caractérisé en ce que l'on effectue un traitement de surface de la charge, en deux étapes séparées dans le temps, la première étape (prétraitement) comprenant un traitement par au moins un polydialkylsiloxane et la seconde étape comprenant un traitement par au moins un acide gras comportant plus de 10 atomes de carbone, et caractérisé en ce que l'on traite des charges telles que le marbre et la calcite ou leur mélange, carbonate de calcium précipité, talc, kaolin, hydroxyde de magnésium, argile, silice, alumine, sulfate de baryum, mica, oxyde de calcium, oxyde d'aluminium et leurs mélanges. L'invention concerne donc un procédé de traitement de charges minérales tel que décrit ci-dessus, qui combine de manière surprenante tout d'abord un prétraitement par un polydialkylsiloxane puis un traitement par un acide gras comme l'acide stéarique. La combinaison de ces deux traitements, et dans cet ordre, conduit à un ensemble particulier de propriétés, tel que démontré ci-dessous, avec un effet de synergie entre les deux agents de traitement.

En pratique, on ajoutera le polydialkylsiloxane en premier lieu puis l'acide gras immédiatement ensuite.

De manière générale, on préférera opérer en deux étapes nettement distinctes, c'est-à-dire l'ajout de polydialkylsiloxane puis l'ajout d'acide gras.

Dans toute la suite de la présente demande, la Demanderesse entend donc par traitement en deux étapes, un traitement où l'addition des deux composés s'effectue en deux étapes séparées dans le temps, même avec un intervalle de temps court. Plus particulièrement, l'invention s'applique parfaitement au carbonate de calcium naturel tel que le marbre et la calcite ou leur mélange.

L'invention s'applique cependant aussi à des charges telles que carbonate de calcium précipité, talc, kaolin, hydroxyde de magnésium, diverses charges de type argile, silice, alumine, sulfate de baryum, mica, oxyde ou hydroxyde de calcium, oxydes d'aluminium, leurs mélanges et analogues.

Par contre, la craie ne donne pas de bons résultats, ce qui indique bien que la probabilité de réussite de l'invention n'était absolument pas acquise.

Selon un mode de réalisation préféré, on utilise un polydialkylsiloxane de formule : (R)₃-Si-O-[(R)₂-Si-O-]ₙ-Si-(R)₃ dont le groupement alkyl R est en C1 - C4.

De manière particulièrement préférée, on utilise un polydiméthylsiloxane (PDMS), pour lequel le groupement R est le radical méthyle.

Selon un mode de réalisation préféré, on utilisera un polydiméthylsiloxane de viscosité cinématique comprise entre 50 et 100 000 centiStockes (cSt), de préférence entre 300 cSt et 5 000 cSt, très préférentiellement autour de 1 000 cSt.

On obtient la meilleure hydrophobicité entre environ 700 cSt et 1 300 cSt.

Comme acide gras, on pourra utiliser tout acide gras ayant plus de 10 atomes de carbone, et de manière tout à fait préférée l'acide stéarique, l'acide palmitique, l'acide béhénique ou leurs mélanges.

Selon un mode de réalisation préféré, et naturellement non limitatif, la mise en oeuvre du procédé selon l'invention est effectuée comme suit :
- on utilise un mélangeur à haute vitesse, dans lequel on place la charge broyée,
- on ajoute le polydialkylsiloxane à une température de l'ordre de 100°C, durant 5 minutes, et au terme de ces 5 minutes,
- on ajoute l'acide gras.

On remarque à ce propos que le polydialkylsiloxane présente l'avantage de conférer des propriétés non-collantes au mélange, qui n'adhère pas aux parois du mélangeur (mais qui adhère lorsque l'on n'emploie pas de polydialkylsiloxane).

Le procédé ci dessus est applicable de manière préférée au marbre ou à la calcite ou leurs mélanges comme charge, au polydiméthylsiloxane comme polydialkylsiloxane, et à la stéarine (mélange d'environ 65 % d'acide stéarique et 35 % d'acide palmitique) comme acide gras ayant plus de 10 atomes de carbone.

Selon encore un mode de réalisation préféré, on utilisera de 100 à 2 000 ppm de polydialkylsiloxane en poids de charge sèche, de préférence de 200 à 1 000, et de manière tout à fait préférée autour de 500.

Selon encore un mode de réalisation préféré, on utilisera de 0,6 % à 1,4 % d'acide gras par poids sec de charge sèche, de préférence de 0,8 % à 1,2 %.

L'invention concerne également les charges ci-dessus caractérisées en ce qu'elles ont été traitées par le procédé selon l'invention.

L'invention concerne plus particulièrement les charges de ce type, caractérisées en ce qu'elles présentent une coulabilité forte, une surface spécifique BET comprise entre 2 et 6 m²/g et une coupe supérieure (« top cut ») en granulométrie inférieure à 10 micromètres, et préférentiellement inférieure à 8 micromètres.

Par charge présentant une coulabilité forte, la Demanderesse entend une charge dont le rapport d'angle d'inclinaison R (rapport entre l'angle d'inclinaison de la charge traitée sur l'angle d'inclinaison de la charge non traitée) déterminé selon la méthode ci-après, appelée « méthode du tas », est inférieur ou égal à 0,98.

En pratique, la détermination d'un angle d'inclinaison représentatif de la coulabilité d'une poudre s'effectue par la pesée de 150 grammes de poudre introduite dans un chargeur vibrant de 45 cm de long. Par une vibration constante du chargeur réglée au niveau 8, la poudre est transportée et versée sur le film, résultant en un tas de poudre qui est fonction de la charge.
L'angle d'inclinaison α est alors calculé par tan α = Hauteur du tas / Rayon du tas. Plus cet angle est faible, meilleure est la coulabilité de la poudre.

L'invention concerne encore plus particulièrement lesdites charges caractérisées en ce qu'elles ont une hydrophobie forte c'est-à-dire en ce qu'elles possèdent un indice de turbidité compris entre 0,9 et 1 et un indice de mousse compris entre 0,7 et 1, les deux indices étant déterminés par la méthode décrite ci-après, dite « méthode de mousse » ou « whizzing method », et en ce qu'elles ont une prise d'humidité faible c'est-à-dire une prise d'humidité inférieure ou égale à 0,42 mg/m² mesurée par la méthode décrite ci-dessous et appelée méthode de prise d'humidité encore dénommée « moisture pick-up method ».

Pour mesurer l'hydrophobie de la charge selon l'invention, la méthode dite de mousse consiste à introduire 0,5 gramme de l'échantillon, dont on veut déterminer l'hydrophobie, dans un tube à essai secoué contenant 3 ml d'eau déminéralisée. Après 5 secondes d'agitation à 2 000 t/min., la turbidité, déterminée à l'aide d'un spectromètre UV et visible, est étalonnée entre 0 et 1. L'indice de turbidité égal à zéro correspond à un surnageant turbide, l'indice de turbidité égal à 1 correspond à de l'eau claire sans aucun trouble.

Dans une seconde étape, il est ajouté à l'échantillon dilué, 0,5 ml d'acide chlorhydrique, de concentration égale à 18 % en poids, sous une agitation égale à 2 000 t/min. pendant 5 secondes.

Il se produit alors un dégagement de gaz carbonique dû à l'attaque acide. A une extrémité de l'échelle d'étalonnage, une forte attaque acide va alors créer un fort dégagement de gaz carbonique conduisant à une forte présence de mousse correspondant à un indice de mousse égal à 0 et à une hydrophobie nulle alors qu'à l'autre extrémité de l'échelle d'étalonnage, un produit totalement hydrophobe ne crée aucun dégagement de gaz carbonique ni aucune mousse, l'indice de mousse est alors égal à 1.

La méthode décrite ci-dessous appelée méthode de prise d'humidité ou encore dénommée « moisture pick-up method » est basée sur la mesure de l'accroissement du poids de l'échantillon pulvérulent à tester tout d'abord placé, pendant 5 heures, dans une atmosphère à un taux d'humidité relative égal à 10 % et à température ambiante, puis placé pendant 2 heures dans une atmosphère à un taux d'humidité relative égal à 90 %.

Connaissant la surface spécifique BET de l'échantillon testé, on détermine alors la quantité d'eau absorbée par unité de surface en g/m².

L'invention concerne également toutes les applications de ces charges traitées dans tout secteur de l'industrie, notamment les secteurs où un caractère hydrophobe de la charge est requis.

Les charges traitées selon l'invention peuvent être avantageusement incorporées dans des polyoléfines, seules ou en mélanges, lesdites polyoléfines pouvant être choisies, à titre non limitatif, parmi les suivantes : polyéthylène linéaire basse densité, polyéthylène basse densité, polyéthylène haute densité et polypropylène et leurs mélanges.

L'incorporation dans la polyoléfine ou le mélange approprié de polyoléfines est effectué dans des appareillages connus, et de manière connue de l'homme du métier.

De même, on pourra se référer au WO 98/29481, traitant de la même application générale, pour la fabrication du film respirable chargé, notamment son étirage uni- ou bi-axial.

En effet, l'invention concerne également un procédé de fabrication d'un film dit « respirable » en polyoléfine(s), comportant au moins une charge minérale du type mentionné ci-dessus, et caractérisé en ce que ladite charge a été traitée par le procédé également décrit ci-dessus.

Selon l'invention, on produit des mélanges-maîtres ou « compounds » qui contiennent de 20 à 80 % en poids de charge traitée par rapport au poids total, de préférence de 45 % à 60 % en poids et tout particulièrement environ 50 % en poids.

Selon un mode de réalisation préféré, ledit film subit un étirage (ou « orientation ») uni- ou biaxial.

L'invention concerne encore les articles comportant au moins un tel film, notamment les produits absorbant l'eau ou des fluides aqueux comme les couches-culottes et produits analogues.

La fabrication de tels produits est bien connue de l'homme du métier, de même que les procédés d'étirage du film.

L'invention concerne également les films ainsi obtenus, à l'état non étiré ou étiré uni- ou bi-axialement.

L'invention concerne encore les mélanges maître ou « compounds » de polyoléfine(s) et de charge(s) traitées selon la présente invention, c'est-à-dire avant la mise sous forme de film.

L'invention concerne plus particulièrement lesdits mélanges maître ou « compounds » caractérisés en ce qu'ils ont un indice de fluidité en volume MVR (melt volume-flow rate) supérieur à 6 cm³/10 min. (température 190°C, charge 5 kg, filière de diamètre égal à 2,095 mm) mesuré selon la norme ISO 1133 et une stabilité thermique élevée, c'est-à-dire une stabilité thermique exprimée, selon la méthode ci-dessous appelée méthode de la bande, par une longueur de bande non décolorée supérieure ou égale à 20 cm.

La méthode de détermination de la stabilité thermique consiste à mettre le compound sous forme de granule dans une extrudeuse pour extruder une barre. Ladite barre de compound est placée dans un four (Mathis Thermotester™ commercialisé par Werner Mathis AG) réglé à 220°C. Dès la mise en place de la barre dans le four, celle-ci est déplacée vers l'extérieur du four à une vitesse de translation égale à 0,833 mm/min. Puis on détermine la longueur de la barre où il n'y a pas de changement de couleur. Plus cette longueur est importante, plus le compound est stable thermiquement.

L'invention concerne enfin les films eux mêmes, contenant au moins une charge traitée selon l'invention.

L'invention concerne plus particulièrement lesdits films caractérises en ce qu'ils sont des films respirables ayant un indice de moucheture, encore appelé indice de « mottling », inférieur à 10, mesuré selon la méthode décrite ci-après et appelée méthode « visionneuse de moucheture ».

Cet indice de moucheture est défini comme un nombre sans dimension qui mesure les irrégularités à la surface de la structure de l'échantillon. Une faible valeur de l'indice de moucheture indique une surface à structure très homogène.

Pour ce faire, on fixe, à l'aide d'un adhésif, un échantillon (de 20 cm de long, 15 cm de large et 20 micromètres d'épaisseur) du film à tester sur une feuille de papier noir de format DIN A4 d'indice de moucheture égal à 2,01.

Cet échantillon ainsi préparé est placé dans un scanner couleur (PowerLook™ III de UMAX™ Systems GmbH) pour l'acquisition des données image de la surface de l'échantillon. Il est à noter que l'échantillon doit être d'abord visualisé sur un écran pour sélectionner la région sans pli, afin de ne pas fausser les résultats par une préparation imparfaite de l'échantillon.

Les données d'image sont ensuite transmises dans un ordinateur équipé d'un système graphique SVGA et d'un analyseur d'image PapEye™ de ONLY Solutions GmbH pour donner la valeur de l'indice de moucheture encore dénommé indice de « mottling ».

L'invention concerne de plus tous les articles en polyoléfine contenant au moins une telle charge, même sous une forme autre qu'un film.

L'invention concerne également toutes les applications de ces films et articles, dans tout secteur de l'industrie, notamment les secteurs où un caractère hydrophobe de la charge ainsi qu'une bonne redispersabilité sont requis.

L'invention sera mieux comprise à la lecture de la description qui va suivre, et des exemples non limitatifs ci-dessous.

### EXEMPLE 1 :

Cet exemple concerne le procédé de traitement selon l'invention d'un marbre de diamètre moyen égal à 1,8 µm, de top cut inférieur à 8 µm et de surface spécifique BET égale à 4 m²/g pour les essais n° 1 à 7.

Pour ce faire, on mesure, pour les différents essais de l'exemple et selon les méthodes précitées,
- pour la charge minérale, la coulabilité, l'hydrophobie et la prise d'humidité ;
- pour le compound, le MVR et la stabilité thermique ;
- pour le film, l'indice de mottling.

### Essai n° 1

Cet essai est un essai témoin mettant en oeuvre le marbre non traité.

Cette charge non traitée a un angle d'inclinaison égal à 40°, un indice de turbidité égal à 0, un indice de mousse égal à 0, et une prise d'humidité égale à 0,95 mg/m².

Le mélange-maître ou compound contient 50 % en poids de la charge minérale, 49,7 % en poids d'un polyéthylène linéaire de faible densité de MVR égal à 15,4 cm³/10 min. mesuré selon la norme ISO 1133 et 0,3 % en poids d'un stabilisant thermique.

Le compound obtenu présente un MVR égal à 5,2 cm³/10 min. et une longueur représentative de la stabilité thermique égale à 10 cm.

Le film mettant en oeuvre le compound obtenu est préparé sur une ligne de production « cast film ».

Le cylindre de l'extrudeuse a une température de l'ordre de 240°C à 250°C et l'unité d'étirage « stretching unit » a une température de 80°C.

La vitesse d'entrée du film sur le premier rouleau de l'unité d'étirage est de 20 m/min., et la vitesse de sortie du dernier rouleau de l'unité d'étirage est de 40 m/min.

L'indice de « mottling » du film obtenu est égal à 31,2.

### Essai n° 2

Cet essai illustre l'art antérieur et met en oeuvre un marbre de diamètre moyen égal à 1,8 µm, de top cut inférieur à 8 µm et de surface spécifique BET égale à 4 m²/g, traité à l'aide de 1 % en poids de stéarine.

Cette charge traitée a un angle d'inclinaison égal à 45°, un indice de turbidité égal à 1, un indice de mousse égal à 0,8 et une prise d'humidité égale à 0,45 mg/m².

Le mélange-maître ou compound contient 50 % en poids de la charge minérale, 49,7 % en poids du même polymère que dans l'essai n° 1 et 0,3 % en poids du même stabilisant que dans l'essai n° 1, et présente un MVR égal à 9,3 cm³/10 min. et une longueur représentative de la stabilité thermique égale à 23 cm.

Le film mettant en oeuvre le compound obtenu, préparé dans les mêmes conditions opératoires et avec le même matériel que dans l'essai n° 1, présente un indice de « mottling » égal à 21,1.

### Essai n° 3

Cet essai illustre un témoin et met en oeuvre le marbre de diamètre moyen égal à 1,8 µm, de top cut inférieur à 8 µm et de surface spécifique BET égale à 4 m²/g, traité à l'aide de 500 ppm en poids d'un hexadécyltrimethoxysilane.

Cette charge traitée a un indice de turbidité égal à 0, un indice de mousse égal à 0 et une prise d'humidité égale à 0,88 mg/m².

Le mélange-maître ou compound contient 50 % en poids de la charge minérale, 49,7 % en poids du même polymère que dans l'essai n° 1 et 0,3 % en poids du même stabilisant que dans l'essai n° 1, et présente un MVR égal à 6,2 cm³/10 min. et une longueur représentative de la stabilité thermique égale à 6 cm.

Le film mettant en oeuvre le compound obtenu, préparé dans les mêmes conditions opératoires et avec le même matériel que dans l'essai n° 1, présente un indice de « mottling » égal à 33,3.

### Essai n° 4

Cet essai illustre l'art antérieur et met en oeuvre le marbre de diamètre moyen égal à 1,8 µm, de top cut inférieur à 8 µm et de surface spécifique BET égale à 4 m²/g, traité à l'aide de d'abord 1 % en poids de stéarine puis de 500 ppm du même silane que celui mis en oeuvre dans l'essai précédent.

Cette charge traitée a un indice de turbidité égal à 1, un indice de mousse égal à 0,75 et une prise d'humidité égale à 0,43 mg/m².

Le mélange-maître ou compound contient 50 % en poids de la charge minérale, 49,7 % en poids du même polymère que dans l'essai n° 1 et 0,3 % en poids du même stabilisant que dans l'essai n° 1, et présente un MVR égal à 9,5 cm³/10 min. et une longueur représentative de la stabilité thermique égale à 23 cm.

Le film mettant en oeuvre le compound obtenu, préparé dans les mêmes conditions opératoires et avec le même matériel que dans l'essai n° 1, présente un indice de « mottling » égal à 21,0.

### Essai n° 5

Cet essai illustre un témoin et met en oeuvre le marbre de diamètre moyen égal à 1,8 µm, de top cut inférieur à 8 µm et de surface spécifique BET égale à 4 m²/g, traité à l'aide de 500 ppm en poids de polydimethylsiloxane de viscosité cinématique égale à 1 000 cSt.

Cette charge traitée a un indice de turbidité égal à 0, un indice de mousse égal à 0 et une prise d'humidité égale à 0,80 mg/m².

Le mélange-maître ou compound contient 50 % en poids de la charge minérale, 49,7 % en poids du même polymère que dans l'essai n° 1 et 0,3 % en poids du même stabilisant que dans l'essai n° 1, et présente un MVR égal à 6,1 cm³/10 min. et une longueur représentative de la stabilité thermique égale à 6 cm.

Le film mettant en oeuvre le compound obtenu, préparé dans les mêmes conditions opératoires et avec le même matériel que dans l'essai n° 1, présente un indice de « mottling » égal à 29,7.

### Essai n° 6

Cet essai illustre l'invention et met en oeuvre le marbre de diamètre moyen égal à 1,8 µm, de top cut inférieur à 8 µm et de surface spécifique BET égale à 4 m²/g, traité d'abord à l'aide de 500 ppm de polydiméthylsiloxane de viscosité cinématique égale à 1 000 cSt puis à l'aide de 1 % de stéarine.

Cette charge traitée a un angle d'inclinaison égal à 36° donc un rapport R égal à 0,9, un indice de turbidité égal à 1, un indice de mousse égal à 0,8 et une prise d'humidité égale à 0,39 mg/m².

Le mélange-maître ou compound contient 50 % en poids de la charge minérale, 49,7 % en poids du même polymère que dans l'essai n° 1 et 0,3 % en poids du même stabilisant que dans l'essai n° 1, et présente un MVR égal à 9,2 cm³/10 min et une longueur représentative de la stabilité thermique égale à 23 cm.

Le film mettant en oeuvre le compound obtenu, préparé dans les mêmes conditions opératoires et avec le même matériel que dans l'essai n° 1, présente un indice de « mottling » égal à 7,6.

### Essai n° 7

Cet essai met en oeuvre le marbre de diamètre moyen égal à 1,8 µm, de top cut inférieur à 8 µm et de surface spécifique BET égal à 4 m²/g, traité simultanément à l'aide de 500 ppm de polydiméthylsiloxane de viscosité cinématique égale à 1 000 cSt, et à l'aide de 1 % de stéarine.

Cette charge traitée a un angle d'inclinaison égal à 36° donc un rapport R égal à 0,9, un indice de turbidité égal à 1, un indice de mousse égal à 0,9 et une prise d'humidité égale à 0,42 mg/m².

Le mélange-maître ou compound contient 50 % en poids de la charge minérale, 49,7 % en poids du même polymère que dans l'essai n° 1 et 0,3 % en poids du même stabilisant que dans l'essai n° 1, et présente un MVR égale à 9,4 cm³/10 min et une longueur représentative de la stabilité thermique égale à 20 cm.

Le film mettant en oeuvre le compound obtenu, préparé dans les mêmes conditions opératoires et avec le même matériel que dans l'essai n° 1, présente un indice de « mottling » égal à 7,8.

### Essai n°8

Cet essai illustre l'invention et met en oeuvre un marbre de diamètre moyen égal à 2,5 µm, de top cut égal à 10 µm et de surface spécifique BET égale à 2,4 m²/g, traité d'abord à l'aide de 300 ppm de polydiméthylsiloxane de viscosité cinématique égale à 1 000 cSt puis à l'aide de 0,6 % de stéarine.

Cette charge traitée a un angle d'inclinaison égal à 34° donc un rapport R égal à 0,85, un indice de turbidité égal à 0,9, un indice de mousse égal à 0,8 et une prise d'humidité égale à 0,42 mg/m².

Le mélange-maître ou compound contient 50 % en poids de la charge minérale, 49,7 % en poids du même polymère que dans l'essai n° 1 et 0,3 % en poids du même stabilisant que dans l'essai n° 1, et présente un MVR égal à 9,7 cm³/10 min. et une longueur représentative de la stabilité thermique égale à 20 cm.

Le film mettant en oeuvre le compound obtenu, préparé dans les mêmes conditions opératoires et avec le même matériel que dans l'essai n° 1, présente un indice de « mottling » égal à 9,9.

### Essai n° 9

Cet essai illustre l'invention et met en oeuvre un carbonate de calcium précipité de diamètre moyen égal à 1,4 µm, de top cut égal à 7 µm et de surface spécifique BET égale à 5,3 m²/g, traité d'abord à l'aide de 500 ppm de polydiméthylsiloxane de viscosité cinématique égale à 1 000 cSt puis à l'aide de 1,3 % de stéarine.

Cette charge traitée a un angle d'inclinaison égal à 36° donc un rapport R égal à 0,9, un indice de turbidité égal à 0,95, un indice de mousse égal à 0,9 et une prise d'humidité égale à 0,37 mg/m².

Le mélange-maître ou compound contient 50 % en poids de la charge minérale, 49,7 % en poids du même polymère que dans l'essai n° 1 et 0,3 % en poids du même stabilisant que dans l'essai n° 1, et présente un MVR égal à 9,1 cm³/10 min. et une longueur représentative de la stabilité thermique égale à 22 cm.

Le film mettant en oeuvre le compound obtenu, préparé dans les mêmes conditions opératoires et avec le même matériel que dans l'essai n° 1, présente un indice de « mottling » égal à 9,1.

### Essai n° 10

Cet essai illustre l'invention et met en oeuvre un marbre de diamètre moyen égal à 1,8 µm, de top cut inférieur à 8 µm et de surface spécifique BET égale à 4 m²/g, traité d'abord à l'aide de 500 ppm de polydiméthylsiloxane de viscosité cinématique égale à 1 000 cSt puis à l'aide de 1,2 % d'acide béhénique.

Cette charge traitée a un angle d'inclinaison égal à 36° donc un rapport R égal à 0,9, un indice de turbidité égal à 1, un indice de mousse égal à 0,9 et une prise d'humidité égale à 0,40 mg/m².

Le mélange-maître ou compound contient 50 % en poids de la charge minérale, 49,7 % en poids du même polymère que dans l'essai n° 1 et 0,3 % en poids du même stabilisant que dans l'essai n° 1, et présente un MVR égal à 9,2 cm³/10 min. et une longueur représentative de la stabilité thermique égale à 23 cm.

Le film mettant en oeuvre le compound obtenu, préparé dans les mêmes conditions opératoires et avec le même matériel que dans l'essai n° 1, présente un indice de « mottling » égal à 8,4.

On remarque que l'essai n° 3 avec un silane et sans acide stéarique produit un fort dégagement de méthanol (quantité supérieure à 1 500 ppm par volume), contrairement aux essais n° 6 à 10 selon l'invention.

Le même dégagement de méthanol est observé dans l'essai n° 4 où on combine l'acide stéarique et un silane.

La quantité de méthanol dégagé lors du traitement est mesurée au moyen d'un Tube Dräger ™ 81 01 631 selon les instructions d'utilisation de la société Dräger Sicherheitstechnick GmbH, Lübeck, Allemagne, de novembre 1999 (5^{ème} édition).

Tous les résultats obtenus dans ces essais sont rassemblés dans le tableau 1 suivant.

**TABLEAU 1**

| | | Témoin | Art antérieur | Témoin | Art antérieur | Témoin | Invention | Invention | Invention | Invention | Invention |
|---|---|---|---|---|---|---|---|---|---|---|---|
| ESSAI n° | | 1 | 2 | 3 | 4 | 5 | 6 | 7 | 8 | 9 | 10 |
| **Procédé** | Traitement | - | 1 % de stéarine | 0,05 % de silane | 1 % de stéarine + 0,05 % de silane | 0,05% de PDMS | 0,05 % de PDMS + 1 % de stéarine | 0,05 % de PDMS + 1 % de stéarine simultanément | 0,03 % de PDMS + 0,6 % de stéarine | 0,05 % de PDMS +1,3 % de stéarine | 0,05 % de PDMS + 1,2 % d'acide béhénique |
| **Charge** | "Whizzing method" : a) indice de turbidité | 0,0 | 1,0 | 0,0 | 1,0 | 0,0 | 1,0 | 1,0 | 0,9 | 0,95 | 1,0 |
| | b) indice de mousse | 0,0 | 0,8 | 0,0 | 0,75 | 0,0 | 0,8 | 0,9 | 0,8 | 0,9 | 0,9 |
| | Prise d'humidité mg/m² | 0,95 | 0,45 | 0,88 | 0,43 | 0,80 | 0,39 | 0,42 | 0,42 | 0,37 | 0,40 |
| **Compound** | MVR (en cm³/10 min.) | 5,2 | 9,3 | 6,2 | 9,5 | 6,1 | 9,2 | 9,4 | 9,7 | 9,1 | 9,2 |
| | Stabilité thermique (en cm) | 10 | 23 | 6 | 23 | 6 | 23 | 20 | 20 | 22 | 23 |
| **Film** | Indice de moucheture | 31,2 | 21,1 | 33,3 | 21,0 | 29,7 | 7,6 | 7,8 | 9,9 | 9,1 | 8,4 |

| | | | | | | | | | | | |
|---|---|---|---|---|---|---|---|---|---|---|---|
| PDMS : polydiméthyl siloxane | | | | | | | | | | | |

La lecture du tableau 1 met en évidence que seul les essais selon l'invention conduisent à la fois à des films ayant un indice de moucheture encore dit de « mottling » inférieur à 10 ainsi qu'à des charges ayant une hydrophobie forte c'est-à-dire un indice de turbidité compris entre 0,9 et 1 et un indice de mousse compris entre 0,7 et 1 et ayant une prise d'humidité faible c'est-à-dire une prise d'humidité inférieure à 0,45 mg/m² mesurée par la méthode décrite ci-dessus ainsi qu'également à des mélanges-maîtres ayant un indice de fluidité en volume (MVR) supérieur à 9 cm³/10 min. (température 190°C, charge 5 kg, filière de diamètre égal à 2,095 mm) mesuré selon la norme ISO 1133 et une stabilité thermique élevée, c'est-à-dire une stabilité thermique exprimée, selon la méthode ci-dessus, par une longueur de bande non décolorée supérieure ou égale à 20 cm.

## Revendications

1. Procédé pour traiter les charges minérales afin de leur conférer un caractère hydrophobe les rendant aptes à être incorporées dans des polymères au moyen desquels on produit les films dits « respirables », notamment des films de polyoléfine(s), **caractérisé en ce que** l'on effectue un traitement de surface de la charge, en deux étapes séparées dans le temps, la première étape (prétraitement) comprenant un traitement par au moins un polydialkylsiloxane et la seconde étape comprenant un traitement par au moins un acide gras comportant plus de 10 atomes de carbone, et **caractérisé en ce que** l'on traite des charges telles que le marbre et la calcite ou leur mélange, carbonate de calcium précipité, talc, kaolin, hydroxyde de magnésium, argile, silice, alumine, sulfate de baryum, mica, oxyde de calcium, oxyde d'aluminium et leurs mélanges.

2. Procédé selon la revendication 1 **caractérisé en ce que** les deux ajouts sont effectués en deux étapes nettement distinctes.

3. Procédé selon la revendication 2 **caractérisé en ce que** l'ajout d'acide gras est effectué immédiatement après celui du polydialkylsiloxane .

4. Procédé selon l'une quelconque des revendications 1 à 2, **caractérisé en ce que** la mise en oeuvre du procédé est effectuée comme suit :
- on utilise un mélangeur à haute vitesse, dans lequel on place la charge broyée,
- on ajoute le polydialkylsiloxane à une température de l'ordre de 100°C, durant 5 minutes, et au terme de ces 5 minutes,
- on ajoute l'acide gras.

5. Procédé selon l'une quelconque des revendications 1 à 4 **caractérisé en ce que** l'on utilise un polydialkylsiloxane de formule (R)₃-Si-O-[(R)₂-Si-O-]ₙ-Si-(R)₃ dont le groupement alkyl R est en C1 - C4.

6. Procédé selon la revendication 5 **caractérisé en ce que** le groupement alkyl R est le radical méthyle.

7. Procédé selon la revendication 6 **caractérisé en ce que** le polydiméthylsiloxane a une viscosité cinématique comprise entre 50 et 100 000 centiStockes, de préférence entre 300 et 5 000, et plus préférentiellement autour de 1 000.

8. Procédé selon l'une quelconque des revendications 1 à 7 **caractérisé en ce que**, comme acide gras, on pourra utiliser tout acide gras ayant plus de 10 atomes de carbone, et de manière tout à fait préférée l'acide stéarique, l'acide palmitique, l'acide béhénique ou leurs mélanges.

9. Procédé selon l'une quelconque des revendications 1 à 8 **caractérisé en ce que** l'on utilise du marbre ou de la calcite ou leur mélange comme charge, du polydiméthylsiloxane comme polydialkylsiloxane, et de la stéarine comme acide gras ayant plus de 10 atomes de carbone.

10. Procédé selon l'une quelconque des revendications 1 à 9 **caractérisé en ce que** l'on utilise de 100 à 2 000 ppm de polydialkylsiloxane en poids de charge sèche, de préférence de 200 à 1 000, et de manière tout à fait préférée autour de 500.

11. Procédé selon l'une quelconque des revendications 1 à 10 **caractérisé en ce que** l'on utilise de 0,6 % à 1,4 % d'acide gras en poids de charge sèche, et de préférence de 0,8 % à 1,2 %.

12. Applications des charges traitées par le procédé selon l'une quelconque des revendications 1 à 11 dans tout secteur de l'industrie, notamment les secteurs où un caractère hydrophobe de la charge, ainsi qu'une bonne redispersabilité, est requis.

13. Applications des charges traitées par le procédé selon l'une quelconque des revendications 1 à 11 dans la fabrication des films dits respirables.

14. Procédé de fabrication d'un film dit « respirable » en polyoléfine(s), comportant au moins une charge minérale telle qu'utilisée dans l'une quelconque des revendications 1 à 11, **caractérisé en ce que** ladite charge est traitée par le procédé selon l'une quelconque des revendications 1 à 11 .

15. Procédé selon la revendication 14 **caractérisé en ce que** la matrice polymère est choisie parmi les polyoléfines, seules ou en mélanges, lesdites polyoléfines pouvant être choisies parmi les suivantes : polyéthylène linéaire basse densité, polyéthylène basse densité, polyéthylène haute densité et polypropylene.

16. Procédé selon la revendication 14 ou 15 **caractérisé en ce qu'**on produit un mélange-maître ou « compound » qui contient de 20 % à 80 % en poids de charge traitée par rapport au poids total, de préférence de 45 % à 60 % en poids, et tout particulièrement environ 50 % en poids.

17. Procédé selon l'une quelconque des revendications 14 à 16, **caractérisé en ce que** ledit polymère est mis sous forme d'un film et **en ce que** ledit film subit un étirage (ou « orientation ») uni- ou biaxial.

18. Films **caractérisés en ce qu'**ils sont obtenus par le procédé selon l'une quelconque des revendications 14 à 17, à l'état non étiré ou étiré uni- ou bi-axialement.

19. Films selon la revendications 18 **caractérisé en ce qu'**ils ont un indice de moucheture encore appelé indice de « mottling » inférieur à 10 mesuré selon la méthode appelée méthode « visionneuse de moucheture ».

20. Articles **caractérisés en ce qu'**ils comportent au moins un film selon la revendication 19, notamment les produits absorbant l'eau ou des fluides aqueux comme les couches-culottes et produits analogues.

21. Mélanges maître ou « compounds » de polyoléfine(s) et de charge(s) **caractérisés en ce qu'** ils ont été obtenus dans le cadre de la mise en oeuvre du procédé selon l'une quelconque des revendications 1 à 11.

22. Mélanges-maîtres ou « compounds » de polyoléfine(s) et de charge(s) selon la revendication 21 **caractérisés en ce qu'**ils ont un indice de fluidité en volume MVR (melt volume-flow rate) supérieur à 9 cm³/10 min. (température 190°C, charge 5 kg, filière de diamètre égal à 2,095 mm) mesuré selon la norme ISO 1133 et une stabilité thermique élevée, c'est-à-dire une stabilité thermique exprimée, selon la méthode appelée méthode de la bande, par une longueur de bande non décolorée supérieure ou égale à 20 cm.

23. Applications des mélanges-maîtres selon la revendication 21 ou 22 dans la fabrication des films dits respirables.

24. Procédé de fabrication d'un film dit « respirable » en polyoléfine(s), dans lequel on utilise une charge traitée selon le procédé selon l'une quelconque des revendications 1 à 11, **caractérisé en ce que** l'on utilise un mélange-maître selon la revendication 22.

25. Articles en polyoléfine contenant au moins une charge traitées par le procédé selon l'une quelconque des revendications 1 à 11, même sous une forme autre qu'un film.

26. Applications des films selon la revendication 19 ou articles selon la revendication 20 ou 25, dans tout secteur de l'industrie, notamment les secteurs où un caractère hydrophobe de la charge, ainsi qu'une bonne redispersabilité, est requis.

## Patentansprüche

1. Verfahren zum Behandeln von mineralischen Füllstoffen, um ihnen einen hydrophoben Charakter zu verleihen, der sie geeignet macht, sie in Polymeren zu inkorporieren, aus denen so genannte "atmende" Folien, insbesondere Folien aus Polyolefin(en), hergestellt werden, **dadurch gekennzeichnet, dass** eine Oberflächenbehandlung des Füllstoffs in zwei zeitlich getrennten Schritten bewirkt wird, wobei der erste Schritt (Vorbehandlung) eine Behandlung mit mindestens einem Polydialkylsiloxan umfasst, und wobei der zweite Schritt, eine Behandlung mit mindestens einer Fettsäure umfasst, die mehr als 10 Kohlenstoffatome umfasst, und **dadurch gekennzeichnet, dass** Füllstoffe wie Marmor und Calcit oder einer Mischung daraus, gefälltes Calciumcarbonat, Talk, Kaolin, Magnesiumhydroxid, Ton, Siliciumdioxid, Tonerde, Bariumsulfat, Glimmer, Calciumoxid, Aluminiumoxid und Mischungen daraus behandelt werden.

2. Verfahren nach Anspruch 1, **dadurch gekennzeichnet, dass** die zwei Zugaben in zwei klar unterschiedlichen Schritten bewirkt werden.

3. Verfahren nach Anspruch 2, **dadurch gekennzeichnet, dass** die Zugabe von Fettsäure sofort nach derjenigen von Polydialkylsiloxan erfolgt.

4. Verfahren nach einem der Ansprüche 1 bis 2, **dadurch gekennzeichnet, dass** die Durchführung des Verfahrens wie folgt bewirkt wird:
- ein Hochgeschwindigkeitsmischer wird verwendet, in dem der gemahlene Füllstoff platziert wird,
- Polydialkylsiloxan wird bei einer Temperatur von etwa 100 °C für 5 Minuten hinzugegeben, und am Ende dieser 5 Minuten
- die Fettsäure wird hinzugegeben.

5. Verfahren nach einem der Ansprüche 1 bis 4, **dadurch gekennzeichnet, dass** ein Polydialkylsiloxan der Formel (R)₃-Si-O- [(R)₂-Si-0-]ₙ-Si-(R)₃ verwendet wird, dessen Alkylgruppe R aus C1-C4 ist.

6. Verfahren nach Anspruch 5, **dadurch gekennzeichnet, dass** die Alkylgruppe R das Methylradikal ist.

7. Verfahren nach Anspruch 6, **dadurch gekennzeichnet, dass** das Polydimethylsiloxan eine kinematische Viskosität hat, die zwischen 50 und 100.000 Centistokes, vorzugsweise zwischen 300 und 5.000, besonders bevorzugt etwa bei 1.000 liegt.

8. Verfahren nach einem der Ansprüche 1 bis 7, **dadurch gekennzeichnet, dass** als Fettsäure jede Fettsäure, die mehr als 10 Kohlenstoffatomen hat, und besonders bevorzugt Stearinsäure, Palmitinsäure, Behensäure oder Mischungen daraus verwendet werden können.

9. Verfahren nach einem der Ansprüche 1 bis 8, **dadurch gekennzeichnet, dass** Marmor oder Calcit oder einer Mischung daraus als Füllstoff, Polydimethylsiloxan als Polydialkylsiloxan, und Stearin als Fettsäure, die mehr als 10 Kohlenstoffatome hat, verwendet werden.

10. Verfahren nach einem der Ansprüche 1 bis 9, **dadurch gekennzeichnet, dass** 100 bis 2.000 ppm Polydialkylsiloxan im Trockengewicht des Füllstoffs, vorzugsweise 200 bis 1.000 und besonders bevorzugt etwa um 500 verwendet werden.

11. Verfahren nach einem der Ansprüche 1 bis 10, **dadurch gekennzeichnet, dass** 0,6 % bis 1,4 % Fettsäure im Trockengewicht des Füllstoffs und vorzugsweise 0,8 % bis 1,2 % verwendet werden.

12. Anwendungen von Füllstoffen, die gemäß dem Verfahren nach einem der Ansprüche 1 bis 11 behandelt wurden, in jedem Sektor der Industrie, insbesondere in den Sektoren, in denen ein hydrophober Charakter des Füllstoffs sowie eine gute Redispergierbarkeit erforderlich sind.

13. Anwendungen von Füllstoffen, die gemäß dem Verfahren nach einem der Ansprüche 1 bis 11 behandelt wurden, bei der Herstellung von so genannten atmenden Folien.

14. Verfahren zur Herstellung einer "atmenden" Folie aus Polyolefin(en), die mindestens einen mineralischen Füllstoff umfassen, wie er in einem der Ansprüche 1 bis 11 verwendet wurde, **dadurch gekennzeichnet, dass** der Füllstoff gemäß dem Verfahren nach einem der Ansprüche 1 bis 11 behandelt wurde.

15. Verfahren nach Anspruch 14, **dadurch gekennzeichnet, dass** die Polymermatrix aus Polyolefinen, allein oder in Mischungen, ausgewählt ist, wobei die Polyolefine aus den folgenden ausgewählt sein können: lineares Polyethylen niedriger Dichte, Polyethylen niedriger Dichte, Polyethylen hoher Dichte und Polypropylen.

16. Verfahren nach Anspruch 14 oder 15, **dadurch gekennzeichnet, dass** eine Grundmischung oder ein "Compound", der 20 Gew-% bis 80 Gew-%, vorzugsweise 45 Gew-% bis 60 Gew-%, besonders bevorzugt ungefähr 50 Gew-%, des behandelten Füllstoffs bezogen auf das Gesamtgewicht enthält.

17. Verfahren nach einem der Ansprüche 14 bis 16, **dadurch gekennzeichnet, dass** das Polymer zu einer Folie geformt wird, und dass die Folie einer uni- oder biaxialen Streckung (oder "Orientierung") unterworfen wird.

18. Folien, **dadurch gekennzeichnet, dass** sie gemäß einem Verfahren nach einem der Ansprüche 14 bis 17 im ungestreckten Zustand oder uni- oder biaxial gestreckten Zustand erhalten werden.

19. Folien nach Anspruch 18, **dadurch gekennzeichnet, dass** sie einen Fleckenindex, der auch "Mottling-Index" genannt wird, unter 10 haben, der nach dem Verfahren, das Fleckbetrachtungsverfahren genannt wird, gemessen wird.

20. Artikel, **dadurch gekennzeichnet, dass** sie mindestens eine Folie gemäß Anspruch 19, insbesondere Wasser oder wässrige Flüssigkeiten absorbierende Produkte, wie Windeln und derartige Produkte, umfassen.

21. Grundmischungen oder "Compounds" aus Polyolefin(en) und Füllstoff(en), **dadurch gekennzeichnet, dass** sie im Rahmen der Durchführung des Verfahrens nach einem der Ansprüche 1 bis 11 erhalten worden sind.

22. Grundmischungen oder "Compounds" aus Polyolefin(en) und Füllstoff(en) nach Anspruch 21, **dadurch gekennzeichnet, dass** sie eine Schmelz-Volumen-Fließrate MVR (melt volume-flow rate) von mehr als 9 cm³/10 min. (Temperatur 190 ºC, Füllstoff 5 kg, Durchmesser der Düse 2,095 mm), die gemäß ISO 1133 gemessen wird, und eine hohe thermische Stabilität, das heißt eine thermische Stabilität, die gemäß dem Verfahren, das Bandverfahren genannt wird, durch eine nicht verfärbte Bandlänge von mehr oder gleich 20 cm ausgedrückt wird, haben.

23. Anwendungen von Grundmischungen gemäß Anspruch 21 oder 22 bei der Herstellung so genannter atmender Folien.

24. Verfahren zur Herstellung einer "atmenden" Folie aus Polyolefin(en), bei dem ein Füllstoff verwendet wird, der gemäß dem Verfahren nach irgendeinem der Ansprüche 1 bis 11 behandelt wurde, **dadurch gekennzeichnet, dass** eine Grundmischung nach Anspruch 22 verwendet wird.

25. Artikel aus Polyolefin, die mindestens einen Füllstoff enthalten, der gemäß irgendeinem der Ansprüche 1 bis 11, auch in einer anderen Form als einer Folie behandelt wurde.

26. Anwendungen der Folien nach Anspruch 19 oder Artikel nach Anspruch 20 oder 25, in jedem Sektor der Industrie, insbesondere den Sektoren, in denen ein hydrophober Charakter des Füllstoffs und eine gute Redispergierbarkeit erforderlich sind.

## Claims

1. Process for treating mineral fillers in order to give them a hydrophobic character making them suitable for incorporation in polymers by means of which the so-called "breathable" films, in particular polyolefin films, are produced, **characterized in that** a surface treatment of the filler is carried out in two separated steps in time: the first step (pre-treatment) comprising treatment with at least one polydialkylsiloxane and the second step comprising treatment with at least one fatty acid comprising more than 10 carbons and **characterized in that** fillers such as marble and calcite or a mixture thereof, precipitated calcium carbonate, talc, kaolin, magnesium hydroxide, clay, silica, alumina, barium sulfate, mica, calcium oxide, aluminium oxide and mixtures thereof are treated.

2. Process according to claim 1, **characterized in that** the two additions are carried out in two clearly distinct steps.

3. Process according to claim 2, **characterized in that** the addition of fatty acid is carried out immediately after the addition of polydialkylsiloxane.

4. Process according to any of claims 1 to 2, **characterized in that** the implementation of the process according to the invention is carried out as follows:
- using a high speed mixer in which the ground charge is placed,
- adding the polydialkylsiloxane at a temperature of 100°C, for 5 minutes and at the end of these 5 minutes,
- adding the fatty acid.

5. Process according to any of claims 1 to 4, **characterized in that** a polydialkylsiloxane having the formula: (R)₃-Si-O-[(R)₂-Si-O-]ₙ-Si-(R)₃ is used, wherein R is a C1-C4 alkyl group.

6. Process according to claim 5, **characterized in that** a polydimethylsiloxane (PDMS) is used, wherein R is methyl group.

7. Process according to claim 6, **characterized in that** the polydimethylsiloxane has a kinematic viscosity of between 50 and 100,000 centiStockes (cSt), preferably between 300 cSt and 5000 cSt, more preferably around 1000 cSt is used.

8. Process according to any of claims 1 to 7, **characterized in that** as fatty acid, any fatty acid having more than 10 carbons, and most preferably stearic acid, palmitic acid, behenic acid or mixtures thereof, can be used.

9. Process according to any of claims 1 to 8, **characterized in that** marble or calcite or mixtures thereof is used as filler, polydimethylsiloxane is used as polydialkylsiloxane and stearin is used as fatty acid comprising more than 10 carbons.

10. Process according to any of claims 1 to 9, **characterized in that** 100 to 2000 ppm of polydialkylsiloxane by weight of dry filler, preferably 200 to 1000, and most preferably around 500, are be used.

11. Process according to any of claims 1 to 10, **characterized in that** 0.6% to 1.4% of fatty acid by weight of dry filler, and preferably 0.8% to 1.2%, is used.

12. Applications of treated fillers by the process according to any of claims 1 to 11 in any sector of the industry, in particular sectors where a hydrophobic character and good redispersibility of the filler are required.

13. Applications of treated fillers by the process according to any of claims 1 to 11 in the production of so-called "breathable" films.

14. Process of production of a so-called "breathable" film made in polyolefin(s), comprising at least one mineral filler such as used according to any of claims 1 to 11, **characterized in that** said filler is treated by the process according to any of claims 1 to 11.

15. Process according to claim 14, **characterized in that** the polymer matrix is chosen from polyolefins alone or in mixtures, wherein said polyolefins can be selected from the following: linear low density polyethylene, low density polyethylene, high density polyethylene and polypropylene and mixtures thereof.

16. Process according to claim 14 or 15, **characterized in that** a masterbatch or "compound" is prepared that contains 20 to 80% by weight of filler treated with respect to the total weight, preferably 45% to 60% by weight and most preferably about 50% by weight.

17. Process according to any claims 14 to 16, **characterized in that** said polymer is formed as a film and said film undergoes uni- or biaxial stretching (or "orientation").

18. Films **characterized in that** they are obtained by the process according to any claims 14 to 17, in an uni- or bi-axially stretched or non-stretched state.

19. Films according to claim 18, **characterized in that** they have a mottling index of less than 10, measured according to the method called "mottling viewer" method.

20. Articles **characterized in that** they comprise at least one film according to claim 19, in particular water- or aqueous fluid-absorbent products such as diapers and the like.

21. Masterbatches or "compounds" of polyolefin(s) and filler(s) **characterized in that** they are obtained using the process according to any claims 1 to 11.

22. Masterbatches or "compounds" of polyolefin(s) and filler(s) according to claim 21, **characterized in that** they have a melt volume-flow rate (MVR) greater than 9 cm³/10 min. (temperature 190°C, load 5 kg, die with a diameter of 2.095 mm) measured according to ISO 1133 and a high thermal stability, i.e. an expressed thermal stability, according to the method hereinafter referred to as the strip method, by a strip length which is not discoloured greater than or equal to 20 cm.

23. Application to masterbatches according to claim 21 or 22, in the production of so-called "breathable" films.

24. Process of production of a so-called "breathable" film made of polyolefin(s), wherein a filler treated according to the process according to any claims 1 to 11 is used, **characterized in that** the masterbatch according to claim 22 is used.

25. Articles made of polyolefin containing at least one filler treated by the process according to any claims 1 to 11, even in a form other than a film.

26. Application of films according to claim 19 or articles according to claim 20 or 25, in any sector of the industry, in particular sectors where a hydrophobic character and good redispersibility of the filler are required.
